# EUROPÄISCHE PATENTSCHRIFT

(11) **EP 1 360 675 B1**
(45) Veröffentlichungstag und Bekanntmachung des Hinweises auf die Patenterteilung: **13.12.2006**
(21) Anmeldenummer: 02708177.7
(22) Anmeldetag: 29.01.2002
(51) Int. Cl.: G08G 1/0969, G01C 21/30, G01C 21/36, G09B 29/10

(54) **VERFAHREN ZUM ABGLEICH DER POSITION EINES LANDFAHRZEUGS**
METHOD FOR ADJUSTING THE POSITION OF A LAND VEHICLE
PROCEDE POUR AJUSTER LA POSITION D'UN VEHICULE TERRESTRE

(30) Priorität: 09.02.2001 DE 10105899
(43) Veröffentlichungstag der Anmeldung: 12.11.2003
(73) Patentinhaber: ROBERT BOSCH GMBH, 70442 Stuttgart (DE)
(72) Erfinder: FRIEDRICHS, Arne, 38114 Braunschweig (DE); DRAEGER, Gerd, 38102 Braunschweig (DE); SKWAREK, Volker, 31162 Bad Salzdetfurth (DE)
(86) Internationale Anmeldenummer: PCT/DE2002/000279
(87) Internationale Veröffentlichungsnummer: WO 2002/065429

(56) Entgegenhaltungen:
- EP-A- 0 942 403
- EP-A- 1 024 347
- EP-A- 1 035 531

## Beschreibung

### Stand der Technik

Die Erfindung geht aus von einem Verfahren zum Abgleich der Position eines Landfahrzeuges mit Stützstellen einer digitalen Straßenkarte.

### Beschreibung

Bei bekannten Navigationssystemen werden dem Fahrzeugführer rechtzeitig vor einem Entscheidungspunkt, z.B. einer Kreuzung oder Abzweigung, Fahrtrichtungsänderungshinweise mitgeteilt. Zur rechtzeitigen Ausgabe der Hinweise benötigt das Navigationsgerät die exakte Position des Fahrzeugs in Bezug auf eine digitale Karte, die dem Navigationsgerät zugrunde liegt. Zu diesem Zweck verfügt das Navigationsgerät über eine ausreichend detaillierte digitale Karte, die üblicherweise auf CD-ROM oder DVD im Fahrzeug mitgeführt wird.

Zwar verfügen diese Speichermedien über sehr detaillierte digitale Straßenkarten für einen ausgewählten Bereich, sie bieten aber keine Orientierungsmöglichkeit, wenn der gespeicherte Kartenbereich verlassen wird oder bei Änderungen und Ergänzungen des Straßennetzes, die nach Herstellung des Speichermediums eingetreten sind, z.B. infolge von Neubauten, Wegfall von Straßen, vorübergehenden oder dauerhaften Sperrungen oder Sperrungen einer Fahrtrichtung bei Einbahnstraßen.

Aus der EP 0 942 403 A1 ist ein Verfahren zur Darstellung von Informationen für ein Navigationsgerät bekannt, bei dem Orientierungspunkte innerhalb der Route bestimmbar sind und der Maßstab des darzustellenden Kartenabschnittes adaptiv in Abhängigkeit der Entfernung zum Orientierungspunkt darstellbar ist.

Es werden dynamisch nur die Wegepunkte ausgewählt, die erforderlich sind für die Anzeige in einem geforderten Maßstab.

### Vorteile der Erfindung

Bei der Erfindung wird als digitale Straßenkarte ein routenspezifischer aktueller Plan, allerdings mit eingeschränktem Datenumfang ausgewertet. Dieser umfasst Wegepunkte zu Darstellung der Straßengeometrie und Entscheidungspunkte zur Darstellung von Verzweigungen für Fahrstreckenalternativen. Dabei wird die Dichte der Wegepunkte so bemessen, dass bei maximal möglicher Fahrgeschwindigkeit und üblicher Reaktionszeit eine rechzeitige Fahrerreaktion vor Entscheidungspunkten ermöglicht wird. Diese Bemessung der Dichte der Wegepunkte stellt sicher, das trotz eines eingeschränkten Datenumfangs und der damit verbundenen Ungenauigkeit der georteten Positionen Fahrtrichtungsänderungshinweise vor Entscheidungspunkten weder zu früh noch zu spät ausgegeben werden, so dass sie gerade rechtzeitig den Fahrzeugführer zu den erforderlichen Fahrmaßnahmen veranlassen können.

Weiterhin ist vorgesehen, dass die Dichte der Wegepunkte entlang der Fahrstrecke in einem Abstand von Entscheidungspunkten, an dem keine Fahrerreaktion nötig ist, vermindert wird.

Hierdurch lässt sich der Datenumfang eines routenspezifischen aktuellen Plans weiter einschränken. Die Reduktion ist dabei besonders wirksam, wenn zwischen Entscheidungspunkten längere Streckenabschnitte liegen. Hingegen bleibt die Dichte der Wegepunkte in der Nähe von Entscheidungspunkten erhalten, so dass weiterhin entsprechend rechtzeitig Fahrtänderungshinweise ausgegeben werden können. Im Sinne der Erfindung wäre auch eine umgekehrte Vorgehensweise, grundsätzlich eine geringe Dichte der Wegepunkte vorzusehen, die Dichte der Wegepunkte aber in der Nähe von Entscheidungspunkten zu steigern, jeweils abhängig von der auf diesen Streckenabschnitten maximal möglichen Geschwindigkeit.

Gemäß einer Weiterbildung kann die Dichte der Wegepunkte in Fahrtrichtung vor Entscheidungspunkten höher als dahinter gesetzt werden. Es ist dann möglich, die Ausgabe einer Zielführungsanweisung in einem ausreichenden zeitlichen Abstand vor einer auszuführenden Aktion zu veranlassen und anschließend die korrekte Ausführung der Zielführungsanweisung zu überprüfen. Bei der Überprüfung der Ausführung der Anweisung ist eine geringere Informationsdichte nötig, da eine genaue Lokalisierung nicht mehr von so großer Bedeutung ist. Auch durch diese Maßnahme kann Speicherplatz und/oder Übertragungskapazität gespart werden.

Die Daten des routenspezifischen Plans können auf drahtlosem Weg zum Fahrzeug übertragen und/oder neben einer Speicherung einer Basiskarte aktualisiert werden.

Hierdurch erübrigt sich eine allzu häufige Aktualisierung mitgeführter Datenträger mit digitalisierten Straßenkarten durch physikalischen Austausch des Datenträgers oder es ist auch möglich, gänzlich ohne mitgeführte Datenträger auszukommen und die komplette Information auf drahtlosem Wege zu erhalten.

Vorteilhafte Weiterbildungen der Erfindung sind in den abhängigen Ansprüchen angegeben.

Ausführungsbeispiele der Erfindung sind in der Zeichnung dargestellt und in der nachfolgenden Beschreibung näher erläutert.

In der beigefügten Zeichnung zeigen:
Fig. 1 ein Beispiel einer ausführlichen digitalen Karte mit Wege- und Entscheidungspunkten,
Fig. 2 ein Beispiel einer reduzierten digitalen Karte mit Entscheidungspunkten und
Fig. 3 ein Beispiel einer reduzierten digitalen Karte mit Entscheidungspunkten und Wegepunkte unterschiedlicher Dichte.

### Beschreibung des Ausführungsbeispiels

Zur Ausführung des Verfahrens wird ein Navigationsgerät mit einem Speicher benötigt, in dem jeweils ein aktueller Kartenausschnitt abgelegt ist, auf dem sich das Fahrzeug befindet. Zu dem benötigt das Navigationsgerät des Fahrzeugs eine Positionsbestimmungssensorik und einen Rechner zum Abgleich der Position mit Stützstellen der digitalen Karte.

Die Positionsbestimmung des Fahrzeugs hinsichtlich der digitalen Karte erfolgt üblicherweise durch einen Vergleich zwischen geometrischen Stützpunkten auf der Karte und tatsächlich befahrenen Koordinaten, die der Positionsbestimmungssensorik entnommen werden. Je höher die Dichte der sowohl messtechnisch als auch aus der Kartengeometrie ermittelten Stützstellen ist, um so genauer kann die entsprechende Fahrzeugposition ermittelt werden. Indem die Abtastfrequenz der Positionsbestimmungsensoren sehr hoch gewählt werden kann, stellt üblicherweise die digitale Karte auf Grund des beschränkten Speicherplatzes einen limitierenden Faktor da.

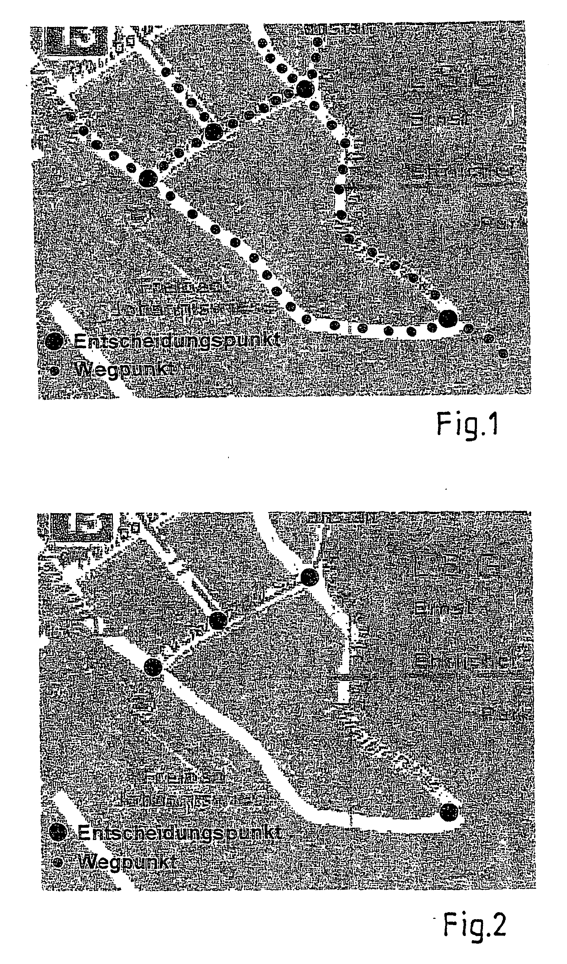

Bei der in Fig. 1 gezeigten Karte sind Entscheidungspunkte durch große und Wegepunkte durch kleine Punkte auf der Straße dargestellt. Durch die hohe Dichte der Wegepunkte umfasst diese Karte eine relativ große Datenmenge. Eine derartige Darstellung ist jedoch ungeeignet, wenn die Karte nicht auf digitalen Speichermedien im Fahrzeug mitgeführt werden kann, sondern aktuell von einem Serviceprovider über die Luftschnittstelle übermittelt werden muss. Auf Grund der Kommunikationskosten sowie der Übertragungszeit und der begrenzten Bandbreite kann nur eine Karte in einer reduzierten Form übertragen werden.

Allerdings reicht das andere Extrem, wie sie Fig. 2 zeigt, nicht aus, um dem Fahrzeugführer rechtzeitig vor Erreichen von Entscheidungspunkten Zielführungsanweisungen zu übermitteln. Bei der Karte in Fig. 2 sind nämlich nur Verzweigungspunkte dargestellt, so dass Fahrhinweise erst bei Erreichen eines Verzweigungspunktes gegeben werden können, was aber in der Regel zu spät ist.

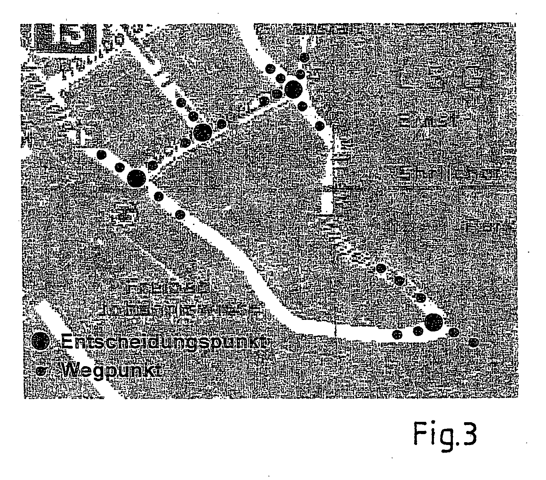

Ein in der Praxis brauchbarer Kompromiss ist bei der Karte in Fig. 3 gezeigt. Dort ist die Dichte der Wegepunkte zwischen den Verzweigungspunkten unterschiedlich. Im größeren Abstand von den Verzweigungspunkten sind nur wenige Wegepunkte dargestellt, während die Dichte in unmittelbarer Nähe zu den Entscheidungspunkten zunimmt. Somit kann in der Nähe von Entscheidungspunkten die jeweilige Position des Fahrzeugs genauer bestimmt werden als an den übrigen Kartenpunkten. Die exakte Distanz zu den Entscheidungspunkten lässt sich dann besser bestimmen um Zielführungshinweise rechtzeitig zu geben.

## Patentansprüche

1. Verfahren zum Abgleich der Position eines Landfahrzeugs mit Stützstellen einer digitalen Straßenkarte, wobei als digitale Straßenkarte ein routenspezifischer Plan mit eingeschränktem Datenumfang ausgewertet wird, der Wegepunkte zur Darstellung der Straßengeometrie und Entscheidungspunke zur Darstellung von Verzweigungen für Fahrstreckenalternativen umfasst und wobei die Dichte der Wegepunkte für eine Positionsbestimmung in der Nähe zu den Entscheidungspunkten zunimmt und so bemessen wird, dass bei maximal möglicher Fahrgeschwindigkeit und üblicher Reaktionszeit eine rechtzeitige Fahrerreaktion vor Entscheidungspunkten ermöglicht wird.

2. Verfahren nach Anspruch 1,
**dadurch gekennzeichnet, dass** die Dichte der Wegepunkte entlang der Fahrstrecke in einem Abstand von Entscheidungspunkten, an dem keine Fahrerreaktion nötig ist, vermindert wird.

3. Verfahren nach Anspruch 1 oder 2,
**dadurch gekennzeichnet, dass** die Dichte der Wegepunkte in Fahrtrichtung vor Entscheidungspunkten höher als dahinter gesetzt wird.

4. Verfahren nach einem der Ansprüche 1 bis 3,
**dadurch gekennzeichnet, dass** die Daten des routenspezifischen Plans auf drahtlosem Weg zum Fahrzeug übertragen und aktualisiert werden.

## Claims

1. Method for aligning the position of a land vehicle with support points on a digital road map, where the digital road map evaluated is a route-specific plan with a restricted scope of data which comprises route points for showing the road geometry and decision points for showing junctions for route alternatives, and where the density of the route points for position-finding increases in proximity to the decision points and is proportioned such that at maximum possible speed of travel and with a normal reaction time it is possible for a driver to react in good time before decision points.

2. Method according to Claim 1,
**characterized in that** the density of the route points along the route is reduced at a distance from decision points which requires no reaction from the driver.

3. Method according to Claim 1 or 2,
**characterized in that** the density of the route points in the direction of travel is set to be greater before decision points than after them.

4. Method according to one of Claims 1 to 3,
**characterized in that** the data for the route-specific plan are transmitted to the vehicle and updated wirelessly.

## Revendications

1. Procédé pour ajuster la position d'un véhicule terrestre sur les points d'appui d'une carte routière numérique, selon lequel on exploite comme carte routière numérique, un plan routier spécifique ayant un volume de données limité, comprenant les points de trajet pour représenter la géométrie routière et les points de décision pour représenter les bifurcations de trajets alternatifs, et densité des points de trajet pour une détermination de position augmentant à proximité des points de décision et cette densité est dimensionnée pour qu'à une vitesse de déplacement maximale possible et pour les temps de réaction habituels, cela permet une réaction à temps du conducteur avant les points de décision.

2. Procédé selon la revendication 1,
**caractérisé en ce que**
la densité des points de trajet le long d'un trajet diminue à une distance des points de décision, à laquelle le conducteur n'a pas à réagir.

3. Procédé selon les revendications 1 ou 2,
**caractérisé en ce que**
la densité des points de trajet est augmentée en amont des points de décision selon la direction de déplacement par rapport à l'aval des points de décision.

4. Procédé selon l'une des revendications 1 à 3,
**caractérisé en ce que**
les données du plan spécifique au trajet sont transmises et actualisées par une liaison sans fil vers le véhicule.
